# EUROPEAN PATENT SPECIFICATION

(11) **EP 4 238 006 B1**
(45) Date of publication and mention of the grant of the patent: **07.05.2025**
(21) Application number: 21805450.0
(22) Date of filing: 01.11.2021
(51) Int. Cl.: G06N 3/049, G06N 3/065

(54) **DISTRIBUTED MULTI-COMPONENT SYNAPTIC COMPUTATIONAL STRUCTURE**
VERTEILTE SYNAPTISCHE MEHRKOMPONENTEN-RECHENSTRUKTUR
STRUCTURE DE CALCUL SYNAPTIQUE À COMPOSANTS MULTIPLES DISTRIBUÉE

(30) Priority: 30.10.2020 US 202063107498 P
(43) Date of publication of application: 06.09.2023
(60) Divisional application: 25167733.2
(73) Proprietor: Innatera Nanosystems B.V., 2288 GK Rijswijk (NL)
(72) Inventor: HETTEMA, Bart, 2624 CP Delft (NL); ZJAJO, Amir, 2511 GK The Hague (NL)
(74) Representative: Hoyng Rokh Monegier B.V.
(86) International application number: PCT/EP2021/080271
(87) International publication number: WO 2022/090542

(56) References cited:
- BENJAMIN BEN VARKEY ET AL: "Neurogrid: A Mixed-Analog-Digital Multichip System for Large-Scale Neural Simulations", PROCEEDINGS OF THE IEEE, IEEE. NEW YORK, US, vol. 102, no. 5, 1 May 2014 (2014-05-01), pages 699 - 716, XP011546633, ISSN: 0018-9219, [retrieved on 20140428], DOI: 10.1109/JPROC.2014.2313565
- PEI JING ET AL: "Towards artificial general intelligence with hybrid Tianjic chip architecture", NATURE, NATURE PUBLISHING GROUP UK, LONDON, vol. 572, no. 7767, 31 July 2019 (2019-07-31), pages 106 - 111, XP036848541, ISSN: 0028-0836, [retrieved on 20190731], DOI: 10.1038/S41586-019-1424-8
- AMANT RENEE ST ET AL: "General-purpose code acceleration with limited-precision analog computation", 2014 ACM/IEEE 41ST INTERNATIONAL SYMPOSIUM ON COMPUTER ARCHITECTURE (ISCA), IEEE, 14 June 2014 (2014-06-14), pages 505 - 516, XP032619380, ISBN: 978-1-4799-4396-8, [retrieved on 20140710], DOI: 10.1109/ISCA.2014.6853213
- TAYLOR J G ED - DIBAZAR A A ET AL: "Chimera: creating a new generation chip by brain guidance", NEURAL NETWORKS, 2004. PROCEEDINGS. 2004 IEEE INTERNATIONAL JOINT CONFERENCE ON, IEEE, PISCATAWAY, NJ, USA, vol. 3, 25 July 2004 (2004-07-25), pages 1989 - 1994, XP010759225, ISBN: 978-0-7803-8359-3, DOI: 10.1109/IJCNN.2004.1380920
- LINARES-BARRANCO B ET AL: "Compact low-power calibration mini-DACs for neural arrays with programmable weights", IEEE TRANSACTIONS ON NEURAL NETWORKS, IEEE SERVICE CENTER, PISCATAWAY, NJ, US, vol. 14, no. 5, 1 September 2003 (2003-09-01), pages 1207 - 1216, XP011103177, ISSN: 1045-9227, DOI: 10.1109/TNN.2003.816370
- CHIARA BARTOLOZZI ET AL: "Synaptic Dynamics in Analog VLSI", NEURAL COMPUTATION, MASSACHUSETTS INSTITUTE OF TECHNOLOGY, US, vol. 19, no. 19, 1 October 2007 (2007-10-01), pages 2581 - 2603, XP002557203, ISSN: 0899-7667
- ZJAJO AMIR ET AL: "Multi-Layer Neuromorphic Synapse for Reconfigurable Networks", 2018 14TH IEEE INTERNATIONAL CONFERENCE ON SIGNAL PROCESSING (ICSP), IEEE, 12 August 2018 (2018-08-12), pages 997 - 1000, XP033524316, DOI: 10.1109/ICSP.2018.8652360

## Description

### TECHNICAL FIELD

The present invention relates to automatic signal recognition techniques, and more particularly, to a system and method for distributed multi-component synaptic computational structures that allows area-optimized and energy-efficient processing mechanisms in networks. In particular the computational structures are spiking neural networks.

### BACKGROUND

Brain-inspired neuromorphic spiking neural network (SNN) emulators form distributed, parallel, and event-driven systems offering capabilities such as adaptation, self-organization, and learning. These emulators implement several concepts, e.g. activity-dependent short-term and long-term plasticity, which are experimentally demonstrated. See C. Mead, "Neuromorphic electronic systems," Proceedings of IEEE, vol. 78, no. 10, pp. 1629-1636, Oct. 1990.

Input information is encoded by patterns of activity occurring over populations of neurons, and the synapses (which each form a connection from one neuron to a subsequent neuron) can adapt their function depending on the pulses (e.g. in the form of a spatio-temporal spike train) they receive, providing signal transmission energy-efficiency, and flexibility to store and recall information. See R. Douglas, M. Mahowald, C. Mead, "Neuromorphic analogue VLSI," Annual Reviews Neuroscience, vol. 18, pp. 255-281, 1995.

The synapses perform a dual function, i.e. the synapses implement memory storage capabilities in addition to their functioning as complex nonlinear operators, which perform distributed computation. Due to the separation of processing elements and memory, traditional, von Neumann-based computing systems are not optimized for computational tasks involving large amounts of high-dimensional data, e.g. image processing, object recognition, probabilistic inference, or speech recognition; these computational tasks can be efficiently completed with powerful, and yet conceptually simple and highly parallel methods, such as SNNs, where memory and processing elements are co-localized. Neuromorphic systems are driven directly by the input data, i.e. synapses receive spikes and neurons generate spikes, respectively, at the rate of the incoming data. Consequently, only when the circuit is processing data, dynamic power consumption occurs. For applications where the spatial-temporal signal activity is sparse, most neurons are non-active at each particular moment, leading to a minimal power consumption.

Neuromorphic computational elements, i.e. neurons and synapses, display a wide range of spiking behaviours, typically represented as dynamical systems of various complexity, representing various trade-offs between the biophysical accuracy and computational capabilities. Several distinctive, hardware implementations of biologically-plausible, biologically-inspired and integrate-and-fire neuron models incorporate membrane dynamics (modelling charge leakage across the membrane); ion channel dynamics (governing ions flow); axonal models (with associated delay components); and dendritic models (modelling influence of the pre- and post-synaptic neurons). See C.D. Schuman, et al., "A survey of neuromorphic computing and neural networks in hardware," arXiv.1705.06963, p. 88, 2017.

Hardware implementations of the synaptic models, which are repurposed for the advancement and employment of new materials, mainly focus on optimizing the synapse implementation. More complex synapse models include a plasticity mechanism (e.g. both short-term and long-term potentiation and depression, see S.-C. Liu, "Analog VLSI circuits for short-term dynamic synapses," EURASIP Journal on Applied Signal Processing, vol. 7, pp. 620-628, 2003), or for more biologically-inspired neuromorphic networks include the chemical interactions of synapses (see F.L. Maldonado Huayaney, et al., "Implementation of multi-factor synaptic plasticity with calcium-based dynamics," IEEE Transactions on Circuits and Systems-I, vol. 63, no. 12, pp. 2189-2199, 2016). Synapses are also utilized as a homeostasis mechanisms for stabilization of the network activity (see S.-C. Liu, B.A. Minch, "Silicon synaptic adaptation mechanisms for homeostasis and contrast gain control," IEEE Transactions on Neural Networks, vol. 13, no. 6, pp. 1497-1503, 2002).

Modern deep learning architectures typically consist of multiple layers, where each layer consists of a vector matrix multiplication implemented by a synaptic matrix, the result of which is used as input for a specific non-linear activation function (e.g. sigmoid function, rectified linear unit (ReLU) activation function, or an activation function based on membrane potential dynamics) at a neuron. The activation function at the neuron is also called the neuron activation function. The neurosynaptic array adopts a hybrid analog-digital signal representation, i.e. the trains of pulses/spikes transmit analog information in the timing of the events, which are converted back into analog signals at the inputs of the synaptic matrix. Analog crossbar arrays inherently realize dot-product operations (which form an essential operation in dense vector matrix multiplication). In analog domain, by applying a vector of voltage signals to the rows of a synaptic crossbar, multiplication by each synapse (weight w) is performed by the Kirchhoff's Current Law (KCL) rule, and the current is summed across each column. i.e. the outputs of the synapses are usually in the current domain, since signal summing in the current domain is simply wiring all outputs together. This (post-) synaptic current denotes the multiplication result, while the signal summing as well as the non-linear functionality are provided by neuron dynamics represented by the neuron activation function.

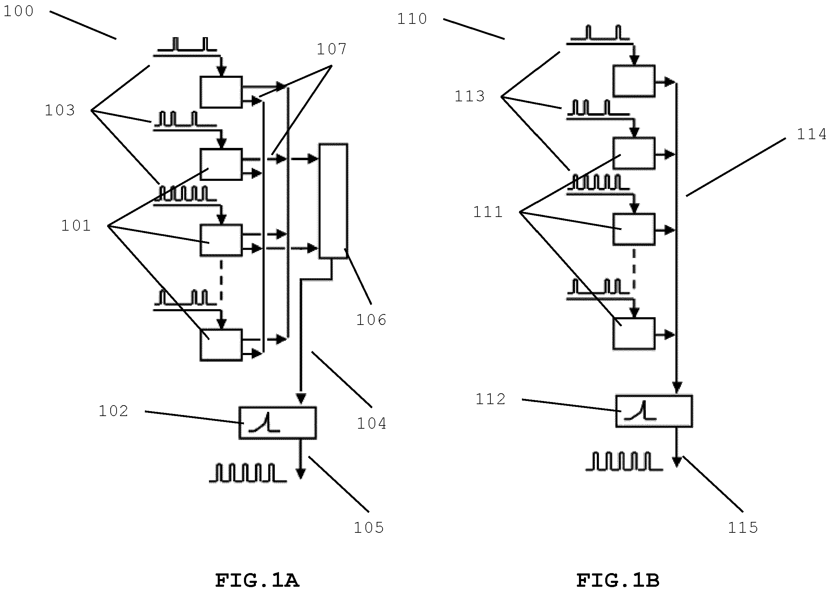

In general, two distinctive approaches are utilized to derive a weighted input, as exemplified by FIG. 1A and FIG. 1B respectively.

FIG. 1A discloses a known first approach where all synapses have two symmetric output currents, which are first separately summed. Consequently, the difference of the two sums is then the weighted input. FIG. 1A indeed shows an example of a portion of a prior art spiking neural network 100, including synaptic input signals 103, m synaptic elements 101, current mirror 106, synaptic output currents 107, weighted synaptic output 104, an output neuron 102 and a neuron output signal 105. The synaptic elements 101 are configured to receive synaptic input signals 100, the synaptic input signals being spatio-temporal spike trains. The synaptic elements 101 convert an input spike in the synaptic input signal 103 to a current, in order to then each apply a weight *w*₁₁, *w*₂₁, ..., *w*_{*m*1} (here the first index indicates the row of the synaptic matrix, while the second index indicates the column of the synapse matrix) to generate two synaptic symmetric output currents 107. The difference of these currents is calculated by the current mirror 106 to generate a final weighted synaptic output 104. The output neuron 102 then generates a neuron output signal 105 based on the weighted synaptic output 104. It should be noted that each of the synaptic elements 101 is configured to perform both the integration of the synaptic input signals 100 to generate a current, and the subsequent application of a weight to this current to generate synaptic output currents 107.

FIG. 1B discloses a known second approach, where all synapses have one bipolar (positive/negative, excitatory/inhibitory) output current, and the weighted input is then the sum of these bipolar output currents. FIG. 1B indeed shows another example of a portion of a prior art spiking neural network 110, including synaptic input signals 113, synaptic elements 111, synaptic output currents 114, an output neuron 112 and a neuron output signal 115. Like in the previous example, the synaptic elements 111 perform the functions of both integration of synaptic input signals and subsequent weight application with weight *w*₁₁, *w*₂₁, ... , *w*_{*m*1}.However, in this method the synaptic elements 111 are configured to generate a positive or negative output current 104, corresponding to an excitatory or inhibitory signal, such that no subtraction of signals is necessary to generate a correct weighted output.

Since each synapse usually includes a current mirror, each synapse requires a larger chip area. However, the wiring in this example is simplified as all building blocks are identical, i.e. the current mirror(s) do not need to be re-designed when implementing a neuron with a higher or lower dimensional input vector, i.e. when the number of synaptic elements m is changed.

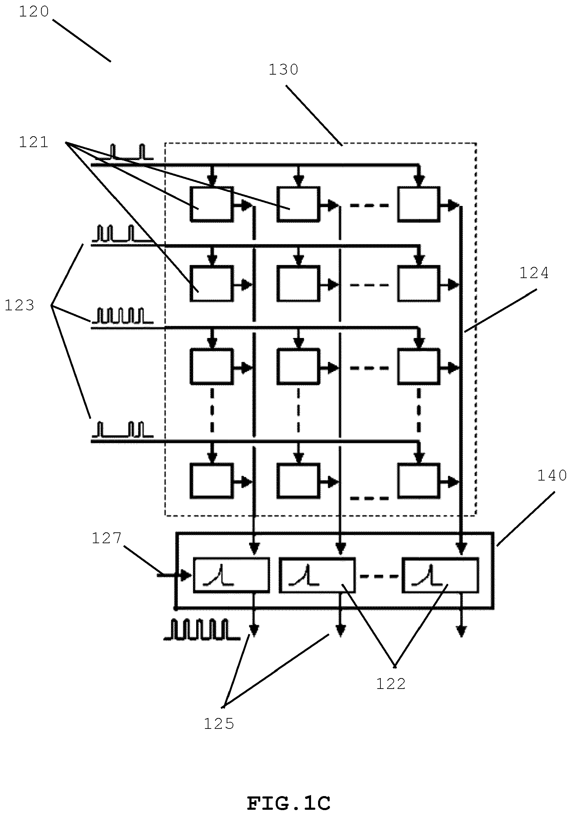

FIG 1C discloses a known neurosynaptic array consisting of a neural network matrix that connects m × n programmable synapses to *n* neurons. Neurosynaptic computational elements are able to generate complex spatio-temporal dynamics, extendable towards specific features of the target signal processing function. The neuron spiking properties are controlled through specific parameter sets. Indeed, FIG. 1C shows a prior art neurosynaptic array 120 forming part of a spiking neural network, comprising a neural network matrix 130 connecting multiple groups of programmable synaptic elements 121 to an array 140 of n output neurons 122 comprising neurons *N*₁, *N*₂, ... , *Nₙ*, wherein the synaptic elements 121 receive synaptic input signals 123 to generate synaptic output currents 124, and wherein the output neurons 122 are configured to generate neuron output signals 125. While each of the neurons 122 is connected to a different column of synaptic elements 121, the synaptic input signal 123 received by each row of synaptic elements 121 is the same, though different weight values *w*_{*i*1}, *w*_{*i*2}, ... , *wᵢₙ* may be applied by different synaptic elements 121 in the same row with row index *i*. Finally, the neurons are configurable by one or more neuron control signals 127. These neuron control signals 127 can control the neuron dynamics represented by the neuron activation function, for example by changing a parameter of the neuron activation function. Again, each of the synaptic elements 121 are configured to perform both the integration of synaptic input signal and subsequent weight application functions.

In a fully connected network, synaptic integration capacitance is the largest contributor to the total area of the array. Capacitors take up a lot of space and consume relatively big amounts of energy. In prior art hardware implementations of spiking neural networks, capacitors are required for synaptic integration in the synaptic elements. Consequently, a prior art spiking neural network comprising many layers of synapses and neurons is not optimized with respect to area and energy use. Accordingly, a need exists in the industry for a more efficient spiking neural network.

The document B. V. Benjamin et al., "Neurogrid: A Mixed-Analog-Digital Multichip System for Large-Scale Neural Simulations," in Proceedings of the IEEE, vol. 102, no. 5, pp. 699-716, May 2014, doi: 10.1109/JPROC.2014.2313565, discloses the design of Neurogrid, a neuromorphic system for simulating large-scale neural models in real time. The choices made in this document were: 1) emulate all neural elements except the soma with shared electronic circuits; this choice maximized the number of synaptic connections; 2) realize all electronic circuits except those for axonal arbors in an analog manner; this choice maximized energy efficiency; and 3) interconnect neural arrays in a tree network; this choice maximized throughput. These three choices made it possible to simulate a million neurons with billions of synaptic connections in real time using 16 Neurocores integrated on a board that consumes three watts.

### SUMMARY

In this patent application, to enable area- and power-efficient design, we report a novel distributed multi-component synaptic structure, where each of the distributed components implements distinctive computational characteristics and can be optimized towards specifics of the predefined signal processing function.

The invention is set out in the appended set of claims.

### BRIEF DESCRIPTION OF DRAWINGS

Embodiments will now be described, by way of example only, with reference to the accompanying schematic drawings in which corresponding reference symbols indicate corresponding parts, and in which:
FIGS. 1A-1C show examples of at least a part of prior art spiking neural networks;
FIG. 2 shows at least a part of a spiking neural network according to an exemplary embodiment;
FIG. 3 shows at least a part of a spiking neural network according to another exemplary embodiment;
FIG. 4A shows a presynaptic integration circuit according to an exemplary embodiment not falling under the scope of the appended claims;
FIG. 4B shows a presynaptic integration circuit according to another exemplary embodiment not falling under the scope of the appended claims;
FIG. 5A shows a weight application circuit according to an exemplary embodiment not falling under the scope of the appended claims;
FIG. 5B shows a weight application circuit according to another exemplary embodiment not falling under the scope of the appended claims;
FIG. 6 shows a polarity selection circuit according to an exemplary embodiment not falling under the scope of the appended claims;
FIG. 7A shows a graph illustrating excitatory synaptic output current dynamics according to an exemplary embodiment;
FIG. 7B shows a graph illustrating spatio-temporal spike train dynamics according to an exemplary embodiment;
FIG. 7C shows a graph illustrating spatio-temporal spike train dynamics according to another exemplary embodiment.
The figures are meant for illustrative purposes only, and do not serve as restriction of the scope or the protection as laid down by the claims.

### DESCRIPTION OF EMBODIMENTS

Hereinafter, certain embodiments will be described in further detail. It should be appreciated, however, that these embodiments may not be construed as limiting the scope of protection for the present disclosure.

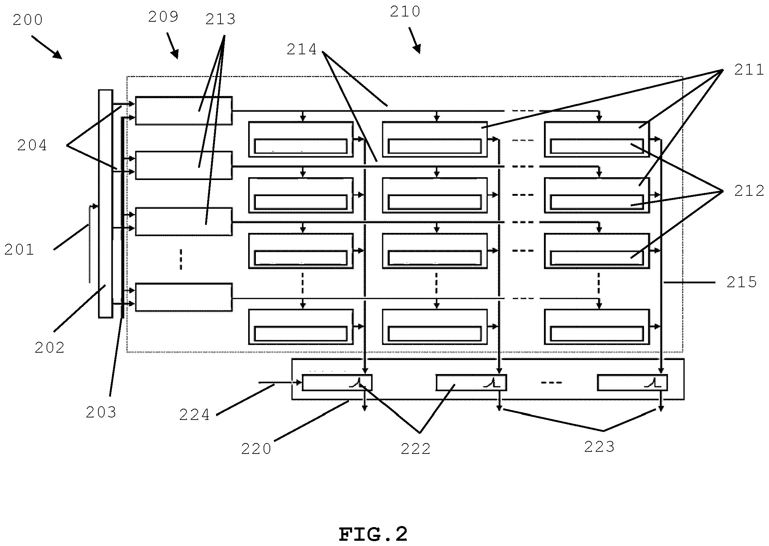

As mentioned above, in a fully connected network with m × n synapses, the capacitors used for synaptic integration is the largest contributor to the total area of the array. For area-optimized design (and subsequently energy-efficient design), instead of using one circuit to reproduce synaptic dynamics (as in FIG. 1A-C), the current invention reproduces synaptic dynamics with two dedicated circuits (FIG. 2), each implementing a well-defined function, the first circuit performing pulse (spike) integration, and the second circuit performing weight application. Consequently, only a single spike integrator (and thus a single capacitor, instead of n capacitors) for every input signal is required. This thus results in an area-efficient design, where the pre-integration is shared per row of weight application elements 211. Furthermore, since only a single pre-integration instead of n pre-integrations now need to be performed, the invention provides for a more power-efficient implementation of the synaptic matrix.

FIG. 2 shows a part of a spiking neural network 200 according to an exemplary embodiment, which may form a sub-network (or ensemble) within a larger neural network comprising a plurality of sub-networks, and may be implemented as a neuro-synaptic core. Fig. 2 shows output neurons 222, which are connected to weight application elements 211, which are connected to presynaptic integrators 213. Exemplary embodiments include at least one presynaptic integrator 213, a plurality 210 of weight application elements 211 and a plurality 220 of output neurons 222. In some embodiments, the spiking neural network 200 comprises several layers, such that the spatio-temporal spike train output signal 223 generated by the output neurons 222 may form the presynaptic signal 204 received by a presynaptic integrator 213 in a next layer, and such that the presynaptic pulse signal 204 received by a presynaptic integrator 213 may be generated by an input neuron, i.e. an output neuron 222 from a previous layer. In order to not clutter the image, only a small number of neurons 222, presynaptic integrators 213 and weight application elements 211 are shown, and only some have a reference numeral attached to them.

Synaptic dynamics are replicated by the presynaptic integrator 213 and the weight application elements 211. The presynaptic integrator 213, performs the function of presynaptic pulse (spike) integration, such that a presynaptic (fast) pulse signal 204 is translated into a (long-lasting) synaptic input signal 214. In some embodiments, the synaptic input signal 214 may be an exponentially decreasing spike, similar to a signal emitted by an AMPA-receptor. In some embodiments, the synaptic input signal 214 may be a synaptic input current. In some embodiments, the synaptic input signal 214 may be a synaptic input voltage. In some embodiments, the presynaptic integrator 213 is configurable by a control signal 203, preferably wherein the control signal 203 controls the temporal shape of the synaptic input signals 214 generated by the presynaptic integrator 213.

Each weight application element 211 performs the typical synaptic function, connecting input and output neurons and applying a weight value, stored in a corresponding weight storage element 212, to the synaptic input signal 214 to generate a synaptic output current 215. In particular, the applied weight value determines the strength of the synaptic output current 215. In some embodiments, the weight application element applies a factor ranging from zero to one to attenuate its synaptic input signal to generate a synaptic output current comprising a selected portion of the synaptic input signal. In some embodiments, the weight value stored by a weight storage element 212 is adjustable, preferably according to a learning rule.

The output neurons 222 are configured to receive at least one synaptic output current 215 from a weight application element 211 to generate a spatio-temporal spike train output signal based on the received one or more synaptic output currents. In some embodiments, the output neurons 222 are configurable by a neuron control signal 224. These neuron control signals 127 can e.g. control the neuron dynamics represented by the neuron activation function, for example by changing a parameter of the neuron activation function.

In an alternative embodiment, the spiking neural network further comprises a row spike decoder 202, configured to decode and allocate the presynaptic pulse signals 204 to the corresponding presynaptic integrators 213, based on a presynaptic input spike 201. Which presynaptic pulse signals to send to which presynaptic integrator 213 depends of the configuration of the spiking neural network. Decoding the presynaptic input spike 201 encompasses.

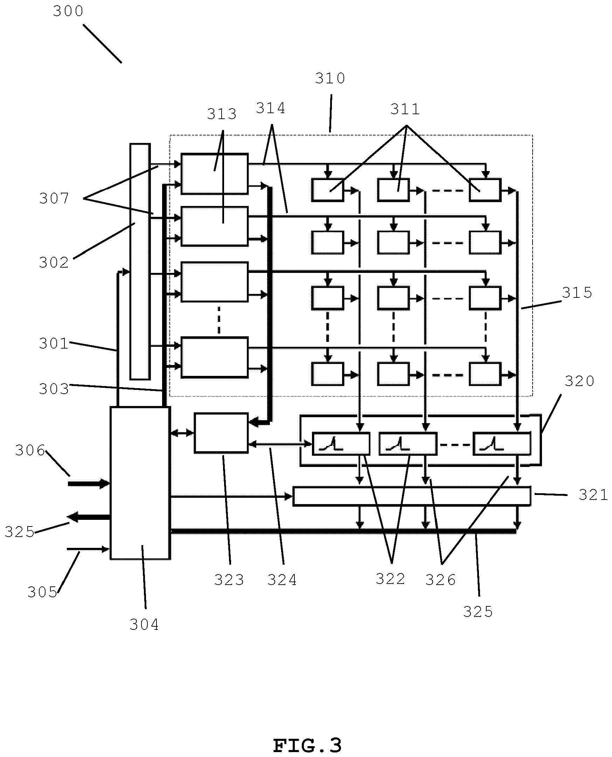

FIG. 3 shows a another example of a part of a spiking neural network 300 according to another exemplary embodiment, which may form a sub-network (or ensemble) within a larger neural network comprising a plurality of sub-networks, and may be implemented as a neuro-synaptic core. The output neurons 322 are connected to weight application elements 311, which are connected to presynaptic integrators 313. Exemplary embodiments include at least one presynaptic integrator 313, a plurality 310 of weight application elements 311 and a plurality 320 of output neurons 322. In some embodiments, the spiking neural network 300 comprises several layers, such that the spatio-temporal spike train output signal 326 generated by the output neurons 322 may form the presynaptic signal 204 received by a presynaptic integrator 213 in a next layer, and such that the presynaptic pulse signal 307 received by a presynaptic integrator 313 may be generated by an input neuron, i.e. an output neuron 322 from a previous layer. In order to not clutter the image, only a small number of neurons 322, presynaptic integrators 313 and weight application elements 311 are shown, and only some have a reference numeral attached to them.

This embodiment further comprises a neurosynaptic core control element 304, a neuron control element 323, a neuron decoder element 321 and a row spike decoder 302 analogous to the row spike decoder 202 from Fig. 2, such that a the row spike decoder 302 decodes and allocates presynaptic pulse signals 307 to presynaptic integrators 313 based on a presynaptic input spike 301.

A plurality of neurosynaptic cores arranged in an array of cores arranges a high-level architecture for learning systems. Each core comprises a network of neurons implemented in hardware, the neurons interconnected by synaptic elements. A single core may implement a complete spiking neural network, or a portion of a spiking neural network forming a separate sub-network. In this way, a large spiking neural network can be partitioned into a number of smaller sub-networks, each sub-network being implemented in one of the cores of the array. In one embodiment, the cores may implement a spiking neural network with associated input data ports, output ports, and/or control and configuration interface, for example each core implementing one or more sub-networks including the arrangement of Fig. 2 or 3.

By partitioning large spiking neural networks into smaller sub-networks and implementing each of the sub-networks on one or more cores, each with their own requisite circuitry, some of the non-idealities of circuits operating at smaller process geometries, and lower operating currents are mitigated, especially for large arrays. The core-based implementation approach thus reduces the impact of physical non-idealities.

A sub-network, or ensemble of neurons that form a co-operative group can for example form a classifier, an ensemble of classifiers, groups of neurons that handle data conversion, feature encoding or solely the classification, et cetera.

In such a regime, a large network of ensembles is partitioned and mapped onto an array of cores, each of which contains a programmable network of spiking neurons. Each core consequently implements a single ensemble, multiple small ensembles (in relation to the number of neurons and synapses in the core), or in the case of large ensembles, only a part of a single ensemble, with other parts implemented on other cores of the array. The modalities of how ensembles are partitioned and mapped to cores is determined by a mapping methodology. The mapping methodology can comprise a constraint-driven partitioning. The constraint can be a performance metric linked to the function of each respective sub-network. The performance metric could be dependent on power-area limitations, memory structures, memory access, time constants, biasing, technology restrictions, resilience, a level of accepted mismatch, and network or physical artifacts.

The neurosynaptic core control element 304 is configured to receive a spike input 306, possibly from a previous layer of input neurons, to send the presynaptic input spike 301 to the row spike decoder 302, and to send the control signals 303 to the presynaptic integrators 303. Further, the neurosynaptic core control element 304 is configured to receive and subsequently transmit a neuron spike output signal 325 from the neuron decoder element 321. Additionally, the neurosynaptic core control element 304 is configured to control both the neuron control element 323 and the neuron decoder element 321. Finally, the neurosynaptic core control element is configurable by a configuration signal 305.

The neuron control element 323 is configured to control the plurality 320 of output neurons 322 through a neuron control signal 324. The neuron decoder element 321 is configured to generate a neuron spike output signal 325 based on at least one spatio-temporal spike train output signal 326, generated by an output neuron 322 based on a synaptic output current 315.

The neuro-synaptic core disclosed in the present invention can thus be organized as repeating arrays of synaptic circuits and neuron units, where each unit can form a cell assembly. The system can incorporate the presence of electronic synapses at the junctions of the array. The periphery of the array can include rows of the synaptic circuits which mimic the action of the soma and axon hillock of biological neurons.

Further, each neuro-synaptic core in the array can have a local router, which communicates to the routers of other cores within a dedicated real-time reconfigurable network-on-chip. A classifier can e.g. be assumed to have a set of output neurons (one for each class) each of which fires an event (spike) according to its firing probability distribution.

Next, presynaptic integration circuits according to the invention will be described.

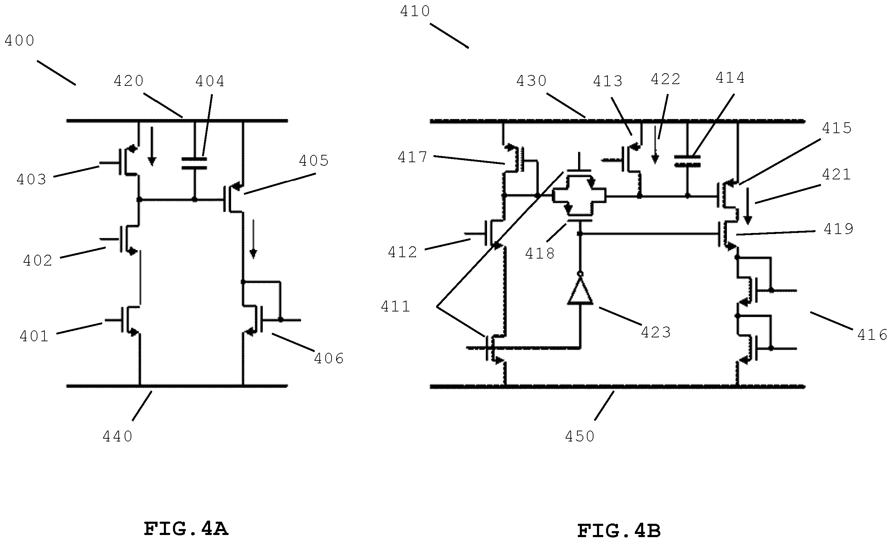

FIG. 4A shows a presynaptic integration circuit 400 according to an exemplary embodiment not falling under the scope of the appended claims of a presynaptic integrator 213, 313, comprising a positive voltage supply 420 (also called a drain with voltage *V_{DD}*), a negative voltage supply 440 (also called a source with voltage *V_{SS}*), a capacitor 404, several field effect transistors (FETs), in particular an input FET 401, a leakage FET 403, an output FET 405, and a current mirror 406. The presynaptic integrator 213, 313 operates in the sub-threshold region and offers a low area and linear filtering properties. The presynaptic integrator 213, 313 translates fast presynaptic pulse signals 204, 307 into (long-lasting) synaptic input signals 214, 314. The synaptic input signals may, for example, be shaped like an exponentially decreasing spike (while preserving AMPA-like receptor temporal dynamics). The presynaptic integrator 213, 313 offers the possibility of multiplexing time spikes originating from different neurons, and provides tunable gain independent from the (tunable) time constant.

In this embodiment, the presynaptic pulse signal 204, 307 from the row spike decoder 213, 302 forms the gate-source voltage over the input FET 401. When the gate-source voltage is positive, corresponding to a spike in the presynaptic pulse signal, the input FET 401 turns on, enabling a drain-source current to flow.

Some embodiments may further include a control FET 402, configured to control the temporal dynamic of the synaptic input signal 214, 314 based on a control signal which is the gate-source voltage over the control FET 402. In this embodiment, the control signal is the control signal 203, 303 from the row spike decoder 202 or neurosynaptic core control element 304. When the gate-source voltage is e.g. positive, the control FET 402 turns on, enabling a drain-source current to flow.

The capacitor 404 is connected to input FET 401 and possibly to control FET 402 such that when both input FET 401 and control FET 402 are turned on, a closed circuit is formed, connecting the positive voltage supply 420 to the negative voltage supply 440 through the capacitor 404, such that the capacitor 404 accumulates charge until the connection ends.

If the capacitor 404 has accumulated charge, the output FET 405 turns on, as its gate-source voltage is equal to the charge accumulated by the capacitor 404. When the output FET 405 is turned on, a drain-source current flow is enabled from the positive voltage supply 420 to the negative voltage supply 440, through the output FET 405 and the current mirror 406. The output FET 405 may be configured to operate in its sub-threshold region, such that if the charge on capacitor 404 is decreasing linearly, the drain-source current over the output FET 405 decreases exponentially. In some embodiments, the output FET 405 operates in its sub-threshold region, and, hence, offers an exponential relationship between its gate-source voltage and its source-drain current. Consequently, a linear decrease in the charge on the capacitor 404 is converted to an exponential decay in the drain-source current

The leakage FET 403 is configured to discharge the capacitor 404 if it is turned on. Due to the constant current through leakage FET 403, the charge accumulated by the capacitor 404 decreases linearly In some embodiments, the leakage FET 403 is controlled by a time constant, the time constant determining the gate-source voltage of the leakage FET 403. The time constant may be chosen such that e.g. AMPA, NDMA, GABA_{A} or GABA_{B} temporal dynamics are realised.

If a current flows through the current mirror 406, a voltage signal is generated proportional to the strength of said current. In this embodiment, the synaptic input signal 214, 314 generated by the presynaptic integrator 213, 313 is this voltage signal. In effect, the current flowing through current mirror 406 is replicated as a voltage signal. Alternatively, or in addition, the current mirror 406 may be a cascode current mirror such that the synaptic input signal 214, 314 comprises two voltage signals, for reduced variation and increased accuracy of current replication. Namely, the cascode implementation improves the output drive strength, by improving impedance.

FIG. 4B shows a presynaptic integration circuit 410 according to another exemplary embodiment not falling under the scope of the appended claims of a presynaptic integrator 213, 313, comprising a positive voltage supply 430, a negative voltage supply 450, a capacitor 414, several field effect transistors (FETs), in particular input FETs 411, a control FET 412 a leakage FET 413, an output FET 415, a mirror FET 417 and a cascode current mirror 416. To make the amount of charge accumulated by the capacitor independent of the capacitance value of capacitor 414 (which can vary up to 20% due to manufacturing variability), the circuit in Fig. 4B is employed. Hence, the circuit no longer depends on the duration a spike in the presynaptic pulse signal 204, 307, as long as it is long enough to stabilize the charge on capacitor 414. This embodiment further includes an output control element, comprising an output control FET 419, a current control FET 418 and an inverter 423.

In this embodiment, the presynaptic pulse signal 204, 307 is the gate-source voltage over the input FETs 411. If the gate-source voltage over input FETs 411 goes high when an input pulse is applied, a current starts to flow, through control FET 412, charging capacitor 414 to the diode voltage of mirror FET 417. It is important to note that gate-source voltage pulse on input FETS 411 needs to be long enough in order for the amount of charge accumulated by the capacitor 414 to reach a constant value.

The control FET 412 is configured to control the temporal dynamic of the synaptic input signal 214, 314 based on the control signal 203, 303. In this embodiment, the control signal 203, 303 is the gate-source voltage over the control FET 402. When the gate-source voltage is positive, the control FET 412 turns on, enabling a drain-source current to flow. In this embodiment, the control signal 203, 303 is configured to regulate the accumulation of charge by the capacitor, such that the amount of charge accumulated by the capacitor is independent of a duration of a spike in the spatio-temporal spike train and the capacitance value of the capacitor, and to regulate the temporal shape and maximum amplitude of the synaptic input signal by controlling the maximum charge on the capacitor. In some embodiments, control FET 412 is a constant current source.

The capacitor 414 is connected to input FETs 411 and control FET 412 such that when both input FETs 411 and control FET 412 are turned on, a closed circuit is formed, connecting the positive voltage supply 430 to the negative voltage supply 450 through the capacitor 414, such that the capacitor 414 accumulates charge until the connection ends.

If the capacitor 414 has accumulated charge, the output FET 415 turns on, as its gate-source voltage is equal to the charge accumulated by the capacitor 414. When the presynaptic pulse signal 204, 307 goes low, the output is enabled; as leakage FET 413 discharges capacitor 414 over time, the drain-source current over output FET 415 will decrease accordingly When both the output FET 415 and the output control FET 419 are turned on, a drain-source current flow is enabled from the positive voltage supply 430 to the negative voltage supply 450, through the output FET 415, the output control FET 419 and the cascode current mirror 416. The output FET 415 may be configured to operate in its sub-threshold region, such that if the charge on capacitor 414 is decreasing linearly, the drain-source current over the output FET 415 decreases exponentially.

The output stage can employ a cascode current mirror 416 for reduced variation and increased accuracy of the current replication. If a current flows through the cascode current mirror 416, two voltage signals are generated proportional to the strength of said current. In this embodiment, the synaptic input signal 214, 314 generated by the presynaptic integrator 213, 313 thus comprises two voltage signals. In effect, the current flowing through cascode current mirror 416 is replicated as two voltage signals. Alternatively, the cascode current mirror 416 may be a regular current mirror producing one voltage signal instead as was seen in the embodiment of FIG. 4A, not falling under the scope of the appended claims.

The output control element comprising the inverter 423, the output control FET 419 and current control FET 418, is configured to regulate the flow of an output current. Arrow 421 denotes the direction of the output current over the drain-source of output FET 415. However, this current only flows if both the output FET 415 and output control FET 419 are turned on. The inverter 423 is connected to an input FET 411, such that a positive voltage is generated at its output if the presynaptic input signal 204, 307 is negative, and a negative voltage is generated at the output of inverter 423 if the presynaptic input signal 204, 307 is positive. As a consequence, the output control FET 419 only turns on if the presynaptic input signal is negative, that is, when the presynaptic input signal is not spiking. Output current flow over FETs 415 and 419 is thus only possible after a spike in the spatio-temporal spike train has ended. Additionally, the current control FET 418 is only turned on when the presynaptic pulse signal 204, 307 is spiking. As a consequence, discharging of the capacitor 414 by the drain-source current over either of FETs 418 and 411 is not possible after a spike has ended, making sure that the discharging of capacitor 414 is controlled by the leakage FET 413.

The leakage FET 413 is configured to discharge the capacitor 414 through its drain-source current (current direction indicated by arrow 422), if it is turned on. When the presynaptic pulse signal 204, 307 goes low and the charge circuit is closed, capacitor 414 discharges with a constant current through leakage FET 413. In some embodiments, the leakage FET 413 is controlled by a time constant, the time constant determining the gate-source voltage of the leakage FET 413. The time constant may be chosen such that AMPA, NDMA, GABA_{A} or GABA_{B} temporal dynamics are realised.

The mirror FET 417 is coupled to the output FET 415, such that the mirror FET 417 and output FET 415 together form a current mirror, ensuring that the drain-source current over the output FET 415 is identical to the drain-source current over the mirror FET 417. Therefore the voltage induced by the capacitor within the pre-integration circuit does not matter anymore for the functioning of the pre-integration circuit.

Next, weight application circuits according to the invention will be described.

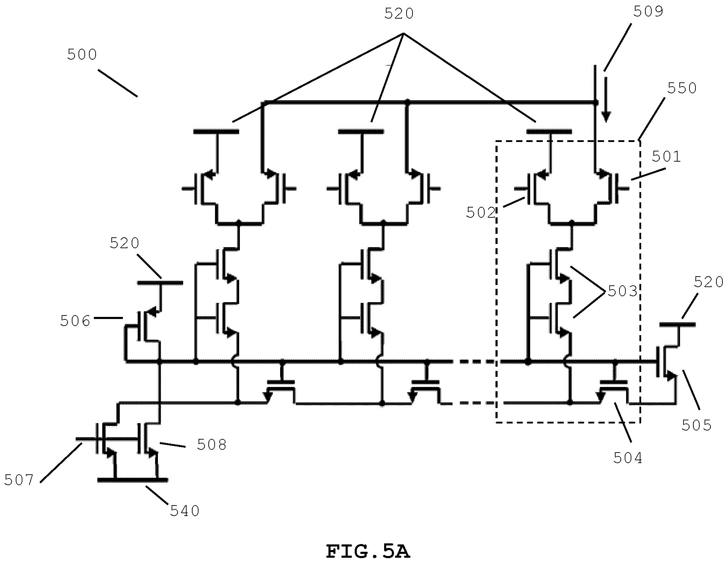

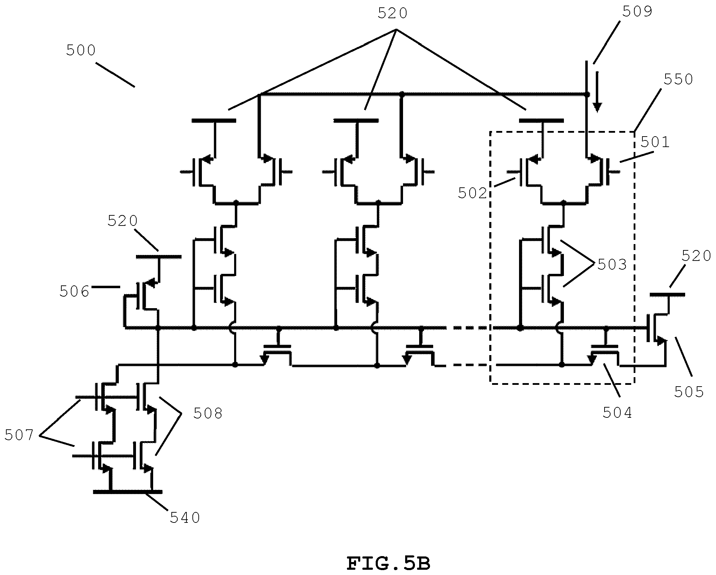

The weight application (multiplication) circuit of Fig. 2 and Fig. 3 is fully distributed and performs the typical synaptic function, connecting the input and output neurons and applying a stored weight. The linearity of the multiplier should be preserved in order to not-degrade learning. The digitally stored weights are transformed to an analog domain through a current-steering D/A converter based on an R-2R architecture, which is shown in Figs. 5A and 5B. The weight application element may apply a factor ranging from zero to one on its input current, attenuating it, and sending the selected portion of the input current to its output.

To minimize sensitivity for weight-errors, it is advantageous to have a small transconductance. Since the design is based on a current-steering D/A conversion, the outputs of multiple weight application elements can be summed straightforwardly

FIG. 5A shows a weight application circuit 500 according to an exemplary embodiment not falling under the scope of the appended claims of a weight application element 211, 311. In order to not clutter the image, only some elements have a reference numeral attached to them, and repeated elements are only shown a limited number of times. The weight application circuit 500 comprises a positive voltage supply 520, a negative voltage supply 540, a first synaptic input receiver 507, a second synaptic input receiver 508, an output terminal 509, and a ladder of output selection elements 550, each comprising dual resistance FETs 503, a single resistance FET 504, a positive output FET 501 and a negative output FET 502. FET 505 and FET 506 can also be connected to the positive voltage supply 520.

The synaptic input receivers 507 and 508 are configured to receive a synaptic input signal 214, 314 in the form of a gate-source voltage. With reference to Fig. 4A not falling under the scope of the appended claims, the synaptic input signal 214, 314 may be provided by output current mirror 406. The gate-source voltages over synaptic input receivers 507, 508 enable current flow through the rest of the weight application circuit 500, particularly along the ladder of output selection elements 550 to the output terminal 509.

The output selection elements 550 are connected sequentially, such that the current flowing through synaptic input receiver 507 is distributed among the output selection elements 550. Each of the output selection elements 550 comprises a single resistance transistor 504 and dual resistance transistors 503, which are positioned such that the current from the synaptic input receiver 507 is divided by two for each output selection element 550 it passes. Thus, the first output selection element 550 receives half of the synaptic input current, the second output selection element 550 receives a fourth, the third output selection element 550 receives an eighth, and so on. The more output selection elements 550 are included, the more accuracy is attainable in weight application.

Each of the output selection elements 550 comprises a positive output FET 501 and a negative output FET 502. The gate-source voltages over these FETs are determined by the digitally stored weight values, stored in the weight storage elements 212. The weight values are stored as bits, with the amount of bits equal to the amount of output control elements 550. Each bit of the stored weight value determines the setting of an output control element, such that either the positive output FET 501 or the negative output FET 502 is turned on. If the positive output FET 501 is turned on, the portion of the synaptic input current that is allocated to the corresponding output selection element is connected to the output terminal 509. If the negative output FET 502 is turned on, the selected portion of the synaptic input current does not contribute to the synaptic output current. As such, a weight application based on a stored binary weight value is realized.

FIG. 5B shows a weight application circuit 500 according to another exemplary embodiment not falling under the scope of the appended claims of a weight application element 211, 311. In this circuit, the synaptic input receivers 507, 508 each comprise two field effect transistors, configured to receive the synaptic input signal 214, 314 in the form of two gate-source voltages. With reference to Fig. 5B not falling under the scope of the appended claims, the synaptic input signal 214, 314 may be provided by output cascode current mirror 416.

Next, a polarity selection circuit according to the invention will be described.

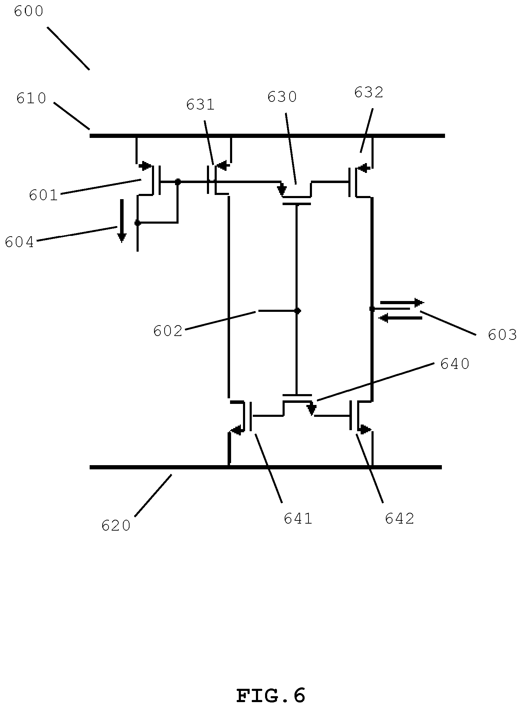

FIG. 6 shows a polarity selection circuit 600 according to an exemplary embodiment not falling under the scope of the appended claims, comprising a polarity selection The polarity of the output of a weight application element 211, 311 may be configurated to generate inhibitory spikes, corresponding to the behaviour of GABA receptors. The polarity selection circuit 600 employs a sourcing current mirror 632 sourcing current and a sinking current mirror 642 sinking current. The polarity selection circuit further comprises a positive voltage supply 610, a negative voltage supply 620, a polarity output element 603, a first passage FET 631, a second passage FET 641, a sourcing selection FET 630, a sinking selection FET 640, and a polarity input element 601 configured to receive the synaptic output current 215, 315. The direction of the synaptic output current 215, 315 is indicated by arrow 604. Depending on whether the voltage applied to the polarity selection terminal 602 is set high or low, the sourcing current mirror or sinking current mirror is enabled, corresponding to an excitatory or inhibitory synapse, respectively.

The polarity input element 601 is configured to receive the synaptic output current as a drain-source current, and to translate this current to a gate-source voltage. This gate-source voltage is applied to the gate terminal of either the sourcing current mirror 632 or the sourcing current mirror 642.

The passage FETs 631 and 632 are configured to pass the signal received by the polarity input element 601 to the sinking current mirror, if applicable. If a voltage is applied to the gate of the first passage FET 631, a drain-source current starts to flow. This drain source current determines the drain-source current flowing through the second passage FET 641, which determines the gate-source voltage of the second passage FET 641. This gate-source voltage applied to passage FET 641 may then be applied to the sinking current mirror 642, if the sinking selection FET 640 is turned on. The gate-source voltage over the second passage FET 641 will be identical to the gate-source voltage generated by polarity input element 601.

If either a high or a low voltage is applied to polarity selection terminal 602, either the sourcing selection FET 630 is turned on, or the sinking selection FET 640 is turned on.

If the sourcing selection FET 630 is turned on, a drain-source current over the sourcing selection FET 630 is enabled. As a consequence, the gate-source voltage over the polarity input element 601 is also applied to sourcing current mirror 632, turning the sourcing current mirror 632 on. If the sourcing current mirror 632 is turned on, a current starts to flow from the positive voltage supply 610 to the polarity output element 603, which is identical to the synaptic output current received by the polarity input element 601.

If the sinking selection FET 640 is turned on, a drain-source current over the sinking selection FET 640 is enabled. As a consequence, the gate-source voltage over the polarity input element 601 is also applied to sinking current mirror 642, turning the sinking current mirror 642 on. If the sinking current mirror 642 is turned on, a current starts to flow from the polarity output element 603 to the negative voltage supply 620. Thus, a current equal to the inverted synaptic input current received by the polarity input element 601 flows through the polarity output element 603.

Through the use of a polarity selection circuit, the spiking neural network can be implemented, without loss of generality, as a conductance-based integrate and fire model, which is one possible implementation of a generalized integrate and fire model.

Next, possible signal patterns achievable by the invention will be described.

A spiking neural network according to the present invention can display a wide range of pattern activity, for example full synchrony, cluster or asynchronous states, depending on the excitatory/inhibitory network interaction conditions, heterogeneities in the input patterns, and the spatio-temporal dynamics implemented in the presynaptic integrators.

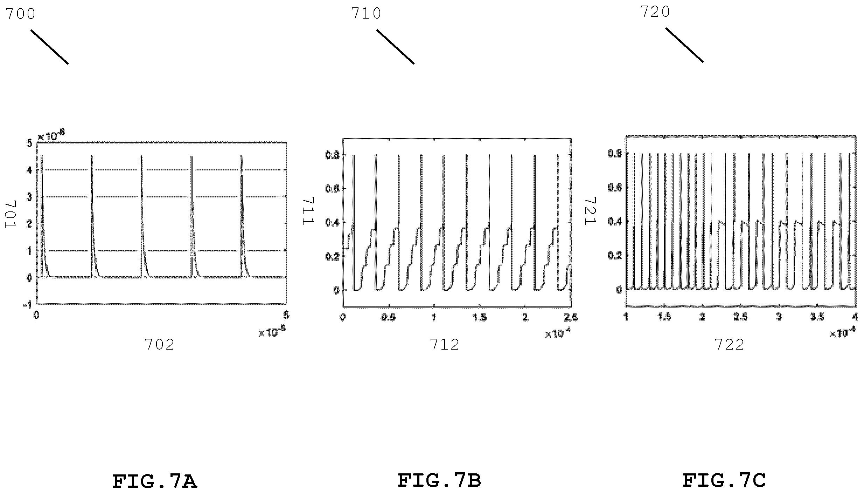

FIG. 7A shows a graph 700 plotting excitatory synaptic output current (or excitatory postsynaptic current, i.e. synaptic EPSC current) 701 in Amperes as a function of time 702 in seconds, wherein the excitatory synaptic output current 701 is one exemplary embodiment of a synaptic output current 215, 315.

FIGS 7B and 7C show graphs 710, 720 plotting voltage of a spatio-temporal spike train 711, 721 in Volts as a function of time 712, 722 in seconds wherein the spatio-temporal spike train is an exemplary embodiment of a spatio-temporal spike train 204, 307. In particular, FIG. 7B shows that accumulating charge on the membrane of a neuron (node) leads to spike generation. In Fig. 7C, non-linear spiking behaviour and frequency adaptability is shown.

The current invention is implemented on an integrated circuit, and can be in particular on a microcontroller integrated circuit. For example, the cores in the core array can form a network-on-chip on the microcontroller integrated circuit. The network-on-chip improves the scalability and the power efficiency of the microcontroller integrated circuit. The network-on-chip can be real-time reconfigurable, or statically defined during the production phase. When the network-on-chip is real-time reconfigurable, the settings of the cores in the core array and their interconnect structure settings can be altered. This alteration can be done based for example on changing input or output of the microcontroller integrated circuit, different demands on accuracy or stability of the classification, the evolution of the network based on its learning rules and a change in communication protocols.

The current invention provides implementation of distributed multi-component hardware structure that enables optimal area and power design of synaptic processing functions. It can realize increase in synaptic structure dimensionality by allowing per-component optimization of individual signal processing characteristics and functions within the spiking neural network.

The current invention provides implementation of an area- and power-efficient presynaptic adaptation mechanism that is robust against array inhomogeneities, where only a single spike integrator (instead of n) for every input neuron is required.

The current invention provides implementation of presynaptic adaptation (presynaptic integration and current generation) mechanism that minimize effects of synaptic capacitance variation. Furthermore, it provides implementation of an efficient mechanism for transformation of a digitally stored weights to an analog domain by applying a factor ranging on its input current, and sending the selected portion of the input current to its output.

Furthermore, the current invention provides implementation of a mechanism to select between excitatory and inhibitory output in a synaptic element. It provides implementation of synaptic elements capable of generating complex dynamics that can be extended towards particular functionality, such as the change in temporal characteristic, to perform time-dependent computations.

## Claims

1. An integrated circuit implementing a spiking neural network (100) comprising a plurality of presynaptic integrators (209), a plurality of weight application elements (210), and a plurality of output neurons (220);
wherein each of the plurality of presynaptic integrators (213) is adapted to receive a presynaptic pulse signal (204) which incites accumulation of charge within the presynaptic integrator in a capacitor configured to accumulate the charge in response to the presynaptic pulse signal, and generate a synaptic input signal (214) based on the accumulated charge such that the synaptic input signal has a pre-determined temporal dynamic;
wherein a first group of weight application elements (211) of the plurality of weight application elements (210) is connected to receive the synaptic input signal (214) from a first one of the plurality of presynaptic integrators (213);
wherein each weight application element (211) of the first group of weight application elements is adapted to apply a weight value to the synaptic input signal (214) to generate a synaptic output current (215), wherein the strength of the synaptic output current is a function of the applied weight value; and
wherein each of the plurality of output neurons (222) is connected to receive a synaptic output current (214) from a second group of weight application elements of the plurality of weight application elements, and generate a spatio-temporal spike train output signal (223) based on the received one or more synaptic output currents such that each of the plurality of output neurons (222) has its own set of weight application elements from which it receives synaptic output currents, this set of weight application elements forming a second group of weight application elements, and each of these weight application elements of this own set of weight application elements receive the synaptic input signal (214) from a different one of the plurality of presynaptic integrators and thus each of these weight application elements of this own set of weight application elements are respectively comprised in a different first group of weight application elements.

2. The integrated circuit of claim 1, wherein each of the weight application elements comprises a weight application circuit comprising:
a synaptic input receiver configured to receive the synaptic input signal from the presynaptic integrator and to generate a synaptic input current based on the synaptic input signal;
a weight storage element configured to store the weight value;
a modification element configured to apply the weight value stored in the weight storage element to the synaptic input current to generate the synaptic output current;
wherein the weight value is preferably stored in digital form and transformed to an analog domain through a current-steering digital-to-analog converter,
wherein the current-steering digital-to-analog converter is preferably based on an R-2R architecture, and
wherein current-steering digital-to-analog converter preferably applies a predetermined factor to attenuate the synaptic input current, and generates the synaptic output current based on the attenuated synaptic input current.

3. The integrated circuit of claim 2, wherein the weight value stored in the weight storage element is adjustable, preferably wherein the weight value stored in the weight storage element is adjusted based on a learning rule; and/or
wherein the network further comprises a row spike decoder configured to supply the presynaptic pulse signal on the basis of a presynaptic input spike such that the presynaptic pulse signal is allocated to the presynaptic integrator on the basis of the configuration of the spiking neural network; and/or
wherein the spiking neural network comprises input neurons which generate the presynaptic pulse signal, and wherein the presynaptic integrator multiplexes time spikes originating from different input neurons; and/or
wherein the pre-determined temporal dynamic of the synaptic input signal that the presynaptic integrator generates is an AMPA, NMDA, GABA_{A}, or GABA_{B} temporal dynamic.

4. The integrated circuit of any of the preceding claims, wherein the presynaptic integrator generates a tunable gain independent from a tunable time constant, wherein the time constant determines a leakage current which decumulates the accumulated charge within the presynaptic integrator and characterizes the temporal dynamic of the synaptic input signal of the presynaptic integrator.

5. The integrated circuit of any of the preceding claims, wherein the presynaptic integrator is configurable by a control signal, preferably wherein the control signal controls the temporal shape of the synaptic input signal; and/or
wherein the output neurons are controlled by a neuron control signal such as to control the neuron dynamics.

6. The integrated circuit of any of the preceding claims, wherein the spiking neural network comprises a plurality of first groups of weight application elements,
wherein each one of the weight application elements in each first group of weight application elements is connected to receive the same synaptic input signal from a respective presynaptic integrator, and
wherein each first group of weight application elements is connected to receive a synaptic input signal from a different one of the plurality of presynaptic integrators.

7. The integrated circuit of claim 6, wherein the spiking neural network comprises a plurality of input neurons, wherein a respective one of the input neurons is connected to provide a presynaptic pulse signal to a respective one of the presynaptic integrators for providing a synaptic input signal for a respective first group of weight application elements.

8. The integrated circuit of any of the preceding claims, wherein the spiking neural network comprises a plurality of second groups of weight application elements, wherein each second group of weight application elements is connected to provide synaptic output signals to a different one of the plurality of output neurons; and/or
wherein the spiking neural network displays a range of pattern activity in use, comprising full synchrony, cluster or asynchronous states, heterogeneities in the input patterns, neurosynaptic elements spatio-temporal dynamics, non-linear spiking behaviour and/or frequency adaptability.

9. The integrated circuit of any of claims 1-8, wherein each of the weight application elements further comprises a polarity selection element, the polarity selection element comprising a polarity selection circuit, such that the synaptic output signal from any of claims 1-8 is used by the polarity selection circuit to generate the polarity output current, preferably wherein the input neuron receives the polarity output current and wherein the replicated synaptic output current corresponds to an excitatory synaptic output signal and the inverted synaptic output current corresponds to an inhibitory synaptic output signal; and wherein the polarity selection circuit is configured to replicate or invert a synaptic output current, and comprises:
a polarity input element configured to receive the synaptic output current;
a polarity selection terminal configured to select a sourcing or sinking current mirror on the basis of a polarity input signal;
wherein the sourcing current mirror is configured to replicate the synaptic output current; and
wherein the sinking current mirror is configured to invert the synaptic output current;
a polarity output element which generates a polarity output current on the basis of the replicated or inverted synaptic output current.

10. The integrated circuit of claim 9, wherein the presynaptic integrator comprises a presynaptic integration circuit configured to generate a synaptic input current for input to a plurality of weight application elements, comprising:
an input element configured to receive a presynaptic pulse signal, preferably a presynaptic pulse voltage, preferably wherein the presynaptic pulse signal is a spatio-temporal spike train;
the capacitor;
a leakage element configured to discharge at least a portion of the charge accumulated by the capacitor; and
an output element configured to generate the synaptic input signal based on the charge accumulated by the capacitor for supply to the plurality of weight application elements..

11. A method of presynaptic integration and weight application for a spiking neural network, the spiking neural network comprising a plurality of presynaptic integrators (209), a plurality of weight application elements (210), and a plurality of output neurons (220); wherein the method comprises:
receiving, by each of the plurality of presynaptic integrators (213), a presynaptic pulse signal (204) which incites accumulation of charge within the presynaptic integrator in a capacitor configured to accumulate the charge in response to the presynaptic pulse signal;
generating, by each of the plurality of presynaptic integrators (213), a synaptic input signal (214) based on the accumulated charge such that the synaptic input signal has a pre-determined temporal dynamic;
receiving, by a first group of weight application elements (211) of the plurality of weight application elements (210), the synaptic input signal (214) from a first one of the plurality of presynaptic integrators (213);
applying a weight value to the synaptic input signal (214) by each weight application element (211) of the first group of weight application elements to generate a synaptic output current (215), wherein the strength of the synaptic output current is a function of the applied weight value; and
receiving, by each of the plurality of output neurons (222), a synaptic output current (214) from a second group of weight application elements of the plurality of weight application elements, and generating a spatio-temporal spike train output signal (223) based on the received one or more synaptic output currents such that each of the plurality of output neurons (222) has its own set of weight application elements from which it receives synaptic output currents, this set of weight application elements forming a second group of weight application elements, and each of these weight application elements of this own set of weight application elements receive the synaptic input signal (214) from a different one of the plurality of presynaptic integrators and thus each of these weight application elements of this own set of weight application elements are respectively comprised in a different first group of weight application elements.

12. The method of presynaptic integration and weight application of claim 11, wherein each of the weight application elements comprises a weight application circuit, adapted to:
receiving the synaptic input signal from the presynaptic integrator and to generate a synaptic input current based on the synaptic input signal;
storing the weight values;
applying the stored weight value to the synaptic input current to generate the synaptic output current.

13. The method of presynaptic integration and weight application of any one of claims 11-12, wherein the presynaptic integrator generates a tunable gain independent from a tunable time constant, wherein the time constant determines a leakage current which decumulates the accumulated charge within the presynaptic integrator and characterizes the temporal dynamic of the synaptic input signal of the presynaptic integrator.

14. The method of presynaptic integration and weight application of any one of claims 11-13, wherein the spiking neural network comprises a plurality of first groups of weight application elements;
wherein each one of the weight application elements in each first group of weight application elements is connected to receive the same synaptic input signal from a respective presynaptic integrator;
and wherein each first group of weight application elements is connected to receive a synaptic input signal from a different one of the plurality of presynaptic integrators, and preferably:
wherein the spiking neural network comprises a plurality of input neurons, wherein a respective one of the input neurons is connected to provide a presynaptic pulse signal to a respective one of the presynaptic integrators for providing a synaptic input signal for a respective first group of weight application elements.

15. A method of classifying input signals using the integrated circuit of any one of claims 1-10.

## Patentansprüche

1. Integrierte Schaltung, die ein gepulstes neuronales Netz (100) implementiert, umfassend eine Vielzahl von präsynaptischen Integratoren (209), eine Vielzahl von Gewichtungsanwendungselementen (210) und eine Vielzahl von Ausgangsneuronen (220);
wobei jeder der Vielzahl von präsynaptischen Integratoren (213) geeignet ist, um ein präsynaptisches Impulssignal (204) zu empfangen, das eine Akkumulation von Ladung innerhalb des präsynaptischen Integrators in einem Kondensator anregt, der konfiguriert ist, um die Ladung als Reaktion auf das präsynaptische Impulssignal zu akkumulieren und ein synaptisches Eingangssignal (214) basierend auf der akkumulierten Ladung zu erzeugen, derart, dass das synaptische Eingangssignal eine zuvor bestimmte zeitliche Dynamik aufweist;
wobei eine erste Gruppe von Gewichtungsanwendungselementen (211) der Vielzahl von Gewichtungsanwendungselementen (210) verbunden ist, um das synaptische Eingangssignal (214) von einem ersten der Vielzahl von präsynaptischen Integratoren (213) zu empfangen;
wobei jedes Gewichtungsanwendungselement (211) der ersten Gruppe von Gewichtungsanwendungselementen geeignet ist, um einen Gewichtungswert auf das synaptische Eingangssignal (214) anzuwenden, um einen synaptischen Ausgangsstrom (215) zu erzeugen, wobei die Stärke des synaptischen Ausgangsstroms von dem angewendeten Gewichtungswert abhängig ist; und
wobei jedes der Vielzahl von Ausgangsneuronen (222) verbunden ist, um einen synaptischen Ausgangsstrom (214) von einer zweiten Gruppe von Gewichtungsanwendungselementen der Vielzahl von Gewichtungsanwendungselementen zu empfangen und ein räumlich-zeitliches Spike-Train-Ausgangssignal (223) basierend auf dem empfangenen einen oder den mehreren synaptischen Ausgangsströmen zu erzeugen, derart, dass jedes der Vielzahl von Ausgangsneuronen (222) seinen eigenen Satz von Gewichtungsanwendungselementen aufweist, von dem es synaptische Ausgangsströme empfängt, wobei dieser Satz von Gewichtungsanwendungselementen eine zweite Gruppe von Gewichtungsanwendungselementen ausbildet, und jedes dieser Gewichtungsanwendungselemente dieses eigenen Satzes von Gewichtungsanwendungselementen das synaptische Eingangssignal (214) von einem anderen der Vielzahl von präsynaptischen Integratoren empfängt und somit jedes dieser Gewichtungsanwendungselemente dieses eigenen Satzes von Gewichtungsanwendungselementen jeweils in einer anderen ersten Gruppe von Gewichtungsanwendungselementen enthalten ist.

2. Integrierte Schaltung nach Anspruch 1, wobei jedes der Gewichtungsanwendungselemente eine Gewichtungsanwendungsschaltung umfasst, umfassend:
einen synaptischen Eingangsempfänger, der konfiguriert ist, um das synaptische Eingangssignal von dem präsynaptischen Integrator zu empfangen und basierend auf dem synaptischen Eingangssignal einen synaptischen Eingangsstrom zu erzeugen;
ein Gewichtungsspeicherelement, das konfiguriert ist, um den Gewichtungswert zu speichern;
ein Modifikationselement, das konfiguriert ist, um den Gewichtungswert, der in dem Gewichtungsspeicherelement gespeichert ist, auf den synaptischen Eingangsstrom anzuwenden, um den synaptischen Ausgangsstrom zu erzeugen;
wobei der Gewichtungswert vorzugsweise in digitaler Form gespeichert und durch einen stromlenkenden Digital-Analog-Wandler in einen analogen Bereich transformiert wird,
wobei der stromlenkende Digital-Analog-Wandler vorzugsweise auf einer R-2R-Architektur basiert, und
wobei der stromlenkende Digital-Analog-Wandler vorzugsweise einen zuvor bestimmten Faktor anwendet, um den synaptischen Eingangsstrom zu dämpfen, und den synaptischen Ausgangsstrom basierend auf dem gedämpften synaptischen Eingangsstrom erzeugt.

3. Integrierte Schaltung nach Anspruch 2, wobei der Gewichtungswert, der in dem Gewichtungsspeicherelement gespeichert ist, anpassbar ist, vorzugsweise wobei der Gewichtungswert, der in dem Gewichtungsspeicherelement gespeichert ist, basierend auf einer Lernregel angepasst wird; und/oder
wobei das Netz ferner einen Zeilenspike-Decoder umfasst, der konfiguriert ist, um das präsynaptische Impulssignal auf der Basis eines präsynaptischen Eingangsspikes zu liefern, derart, dass das präsynaptische Impulssignal auf der Basis der Konfiguration des gepulsten neuronalen Netzes dem präsynaptischen Integrator zugewiesen wird; und/oder
wobei das gepulste neuronale Netz Eingangsneuronen umfasst, die das präsynaptische Impulssignal erzeugen, und wobei der präsynaptische Integrator Zeit-Spikes multiplexiert, die von verschiedenen Eingangsneuronen stammen; und/oder
wobei die zuvor bestimmte zeitliche Dynamik des synaptischen Eingangssignals, die der präsynaptische Integrator erzeugt, eine AMPA, NMDA, GABA_{A} oder GABA_{B} zeitliche Dynamik ist.

4. Integrierte Schaltung nach einem der vorstehenden Ansprüche, wobei der präsynaptische Integrator eine einstellbare Verstärkung unabhängig von einer einstellbaren Zeitkonstante erzeugt, wobei die Zeitkonstante einen Verluststrom, der die akkumulierte Ladung innerhalb des präsynaptischen Integrators dekumuliert, bestimmt und die zeitliche Dynamik des synaptischen Eingangssignals des präsynaptischen Integrators charakterisiert.

5. Integrierte Schaltung nach einem der vorstehenden Ansprüche, wobei der präsynaptische Integrator durch ein Steuersignal konfigurierbar ist, wobei vorzugsweise das Steuersignal die zeitliche Form des synaptischen Eingangssignals steuert; und/oder
wobei die Ausgangsneuronen durch ein Neuronensteuersignal gesteuert werden, um die Neuronendynamik zu steuern.

6. Integrierte Schaltung nach einem der vorstehenden Ansprüche, wobei das gepulste neuronale Netz eine Vielzahl von ersten Gruppen von Gewichtungsanwendungselementen umfasst,
wobei jedes der Gewichtungsanwendungselemente in jeder ersten Gruppe von Gewichtungsanwendungselementen verbunden ist, um dasselbe synaptische Eingangssignal von einem jeweiligen präsynaptischen Integrator zu empfangen, und
wobei jede erste Gruppe von Gewichtungsanwendungselementen verbunden ist, um ein synaptisches Eingangssignal von einem anderen der Vielzahl von präsynaptischen Integratoren zu empfangen.

7. Integrierte Schaltung nach Anspruch 6, wobei das gepulste neuronale Netz eine Vielzahl von Eingangsneuronen umfasst, wobei ein jeweiliges der Eingangsneuronen verbunden ist, um ein präsynaptisches Impulssignal an einen jeweiligen der präsynaptischen Integratoren bereitzustellen, zum Bereitstellen eines synaptischen Eingangssignals für eine jeweilige erste Gruppe von Gewichtsanwendungselementen.

8. Integrierte Schaltung nach einem der vorstehenden Ansprüche, wobei das gepulste neuronale Netz eine Vielzahl von zweiten Gruppen von Gewichtungsanwendungselementen umfasst, wobei jede zweite Gruppe von Gewichtungsanwendungselementen verbunden ist, um synaptische Ausgangssignale an ein anderes der Vielzahl von Ausgangsneuronen bereitzustellen; und/oder
wobei das gepulste neuronale Netz in Verwendung eine Reihe von Musteraktivitäten anzeigt, umfassend vollständige Synchronizität, Cluster- oder asynchrone Zustände, Heterogenitäten in den Eingangsmustern, räumlich-zeitliche Dynamik neurosynaptischer Elemente, nichtlineares Spiking-Verhalten und/oder Frequenzanpassungsfähigkeit.

9. Integrierte Schaltung nach einem der Ansprüche 1 bis 8, wobei jedes der Gewichtungsanwendungselemente ferner ein Polaritätsauswahlelement umfasst, das Polaritätsauswahlelement umfassend eine Polaritätsauswahlschaltung, derart, dass das synaptische Ausgangssignal aus einem der Ansprüche 1 bis 8 durch die Polaritätsauswahlschaltung verwendet wird, um den Polaritätsausgangsstrom zu erzeugen, vorzugsweise wobei das Eingangsneuron den Polaritätsausgangsstrom empfängt, und wobei der replizierte synaptische Ausgangsstrom einem erregenden synaptischen Ausgangssignal entspricht und der invertierte synaptische Ausgangsstrom einem hemmenden synaptischen Ausgangssignal entspricht; und wobei die Polaritätsauswahlschaltung konfiguriert ist, um einen synaptischen Ausgangsstrom zu replizieren oder zu invertieren, und umfasst:
ein Polaritätseingangselement, das konfiguriert ist, um den synaptischen Ausgangsstrom zu empfangen;
einen Polaritätsauswahlanschluss, der konfiguriert ist, um auf der Basis eines Polaritätseingangssignals einen zuführenden oder senkenden Stromspiegel auszuwählen;
wobei der zuführende Stromspiegel konfiguriert ist, um den synaptischen Ausgangsstrom zu replizieren; und
wobei der senkende Stromspiegel konfiguriert ist, um den synaptischen Ausgangsstrom zu invertieren; ein Polaritätsausgangselement das auf der Basis des replizierten oder invertierten synaptischen Ausgangsstroms einen Polaritätsausgangsstrom erzeugt.

10. Integrierte Schaltung nach Anspruch 9, wobei der präsynaptische Integrator eine präsynaptische Integrationsschaltung umfasst, die konfiguriert ist, um einen synaptischen Eingangsstrom zum Eingeben in eine Vielzahl von Gewichtungsanwendungselementen zu erzeugen, umfassend:
ein Eingangselement, das konfiguriert ist, um ein präsynaptisches Impulssignal zu empfangen, vorzugsweise eine präsynaptische Impulsspannung, vorzugsweise wobei das präsynaptische Impulssignal ein räumlich-zeitlicher Spike-Train ist;
den Kondensator;
ein Verlustelement, das konfiguriert ist, um mindestens einen Abschnitt der Ladung, die durch den Kondensator akkumuliert wird, zu entladen; und
ein Ausgangselement, das konfiguriert ist, um das synaptische Eingangssignal basierend auf der Ladung, die durch den Kondensator für Lieferung an die Vielzahl von Gewichtungsanwendungselemente akkumuliert wird, zu erzeugen.

11. Verfahren für präsynaptische Integration und Gewichtungsanwendung für ein gepulstes neuronales Netz, das gepulste neuronale Netz umfassend eine Vielzahl von präsynaptischen Integratoren (209), eine Vielzahl von Gewichtungsanwendungselementen (210) und eine Vielzahl von Ausgangsneuronen (220);
wobei das Verfahren umfasst:
Empfangen, durch jeden der Vielzahl von präsynaptischen Integratoren (213), eines präsynaptischen Impulssignals (204), das die Akkumulation von Ladung innerhalb des präsynaptischen Integrators in einem Kondensator anregt, der konfiguriert ist, um die Ladung als Reaktion auf das präsynaptische Impulssignal zu akkumulieren;
Erzeugen, durch jeden der Vielzahl von präsynaptischen Integratoren (213), eines synaptischen Eingangssignals (214) basierend auf der akkumulierten Ladung, derart, dass das synaptische Eingangssignal eine zuvor bestimmte zeitliche Dynamik aufweist;
Empfangen, durch eine erste Gruppe von Gewichtungsanwendungselementen (211) der Vielzahl von Gewichtungsanwendungselementen (210), des synaptischen Eingangssignals (214) von einem ersten der Vielzahl von präsynaptischen Integratoren (213);
Anwenden eines Gewichtungswerts auf das synaptische Eingangssignal (214) durch jedes Gewichtungsanwendungselement (211) der ersten Gruppe von Gewichtungsanwendungselementen, um einen synaptischen Ausgangsstrom (215) zu erzeugen, wobei die Stärke des synaptischen Ausgangsstroms von dem angewendeten Gewichtungswert abhängig ist; und
Empfangen, durch jedes der Vielzahl von Ausgangsneuronen (222), eines synaptischen Ausgangsstroms (214) von einer zweiten Gruppe von Gewichtungsanwendungselementen der Vielzahl von Gewichtungsanwendungselementen und Erzeugen eines räumlich-zeitlichen Spike-Train-Ausgangssignals (223) basierend auf dem empfangenen einen oder den mehreren synaptischen Ausgangsströmen, derart, dass jedes der Vielzahl von Ausgangsneuronen (222) seinen eigenen Satz von Gewichtungsanwendungselementen aufweist, von dem es synaptische Ausgangsströme empfängt, wobei dieser Satz von Gewichtungsanwendungselementen eine zweite Gruppe von Gewichtungsanwendungselementen ausbildet, und jedes dieser Gewichtungsanwendungselemente dieses eigenen Satzes von Gewichtungsanwendungselementen das synaptische Eingangssignal (214) von einem anderen der Vielzahl von präsynaptischen Integratoren empfängt und somit jedes dieser Gewichtungsanwendungselemente dieses eigenen Satzes von Gewichtungsanwendungselementen jeweils in einer anderen ersten Gruppe von Gewichtungsanwendungselementen enthalten ist.

12. Verfahren für präsynaptische Integration und Gewichtungsanwendung nach Anspruch 11, wobei jedes der Gewichtungsanwendungselemente eine Gewichtungsanwendungsschaltung umfasst, die geeignet ist zum:
Empfangen des synaptischen Eingangssignals von dem präsynaptischen Integrator und basierend auf dem synaptischen Eingangssignal Erzeugen eines synaptischen Eingangsstroms;
Speichern der Gewichtungswerte;
Anwenden des gespeicherten Gewichtungswerts auf den synaptischen Eingangsstrom, um den synaptischen Ausgangsstrom zu erzeugen.

13. Verfahren für präsynaptische Integration und Gewichtungsanwendung nach einem der Ansprüche 11 bis 12, wobei der präsynaptische Integrator eine einstellbare Verstärkung unabhängig von einer einstellbaren Zeitkonstante erzeugt, wobei die Zeitkonstante einen Verluststrom, der die akkumulierte Ladung innerhalb des präsynaptischen Integrators dekumuliert, bestimmt und die zeitliche Dynamik des synaptischen Eingangssignals des präsynaptischen Integrators charakterisiert.

14. Verfahren für präsynaptische Integration und Gewichtungsanwendung nach einem der Ansprüche 11 bis 13, wobei das gepulste neuronale Netz eine Vielzahl von ersten Gruppen von Gewichtungsanwendungselementen umfasst;
wobei jedes der Gewichtungsanwendungselemente in jeder ersten Gruppe von Gewichtungsanwendungselementen verbunden ist, um dasselbe synaptische Eingangssignal von einem jeweiligen präsynaptischen Integrator zu empfangen;
und wobei jede erste Gruppe von Gewichtungsanwendungselementen verbunden ist, um ein synaptisches Eingangssignal von einem anderen der Vielzahl von präsynaptischen Integratoren zu empfangen, und vorzugsweise:
wobei das gepulste neuronale Netz eine Vielzahl von Eingangsneuronen umfasst, wobei ein jeweiliges der Eingangsneuronen verbunden ist, um ein präsynaptisches Impulssignal an einen jeweiligen der präsynaptischen Integratoren bereitzustellen, zum Bereitstellen eines synaptischen Eingangssignals für eine jeweilige erste Gruppe von Gewichtsanwendungselementen.

15. Verfahren zum Klassifizieren von Eingangssignalen unter Verwendung der integrierten Schaltung nach einem der Ansprüche 1 bis 10.

## Revendications

1. Circuit intégré mettant en œuvre un réseau neuronal impulsionnel (100) comprenant une pluralité d'intégrateurs présynaptiques (209), une pluralité d'éléments d'application de poids (210) et une pluralité de neurones de sortie (220) ;
dans lequel chacun de la pluralité d'intégrateurs présynaptiques (213) est adapté pour recevoir un signal d'impulsion présynaptique (204) qui incite une accumulation de charge au sein de l'intégrateur présynaptique dans un condensateur configuré pour accumuler la charge en réponse au signal d'impulsion présynaptique, et générer un signal d'entrée synaptique (214) sur la base de la charge accumulée de telle sorte que le signal d'entrée synaptique a une dynamique temporelle prédéterminée ;
dans lequel un premier groupe d'éléments d'application de poids (211) de la pluralité d'éléments d'application de poids (210) est connecté pour recevoir le signal d'entrée synaptique (214) à partir d'un premier intégrateur présynaptique de la pluralité d'intégrateurs présynaptiques (213) ;
dans lequel chaque élément d'application de poids (211) du premier groupe d'éléments d'application de poids est adapté pour appliquer une valeur de poids au signal d'entrée synaptique (214) afin de générer un courant de sortie synaptique (215), dans lequel l'intensité du courant de sortie synaptique est une fonction de la valeur de poids appliquée ; et
dans lequel chacun de la pluralité de neurones de sortie (222) est connecté pour recevoir un courant de sortie synaptique (214) à partir d'un second groupe d'éléments d'application de poids de la pluralité d'éléments d'application de poids, et générer un signal de sortie de train impulsionnel spatio-temporel (223) sur la base du ou des courants de sortie synaptiques reçus de telle sorte que chacun de la pluralité de neurones de sortie (222) a son propre ensemble d'éléments d'application de poids à partir desquels il reçoit des courants de sortie synaptiques, cet ensemble d'éléments d'application de poids formant un second groupe d'éléments d'application de poids, et chacun de ces éléments d'application de poids de ce propre ensemble d'éléments d'application de poids reçoit le signal d'entrée synaptique (214) à partir d'un intégrateur présynaptique différent de la pluralité d'intégrateurs présynaptiques et donc chacun de ces éléments d'application de poids de ce propre ensemble d'éléments d'application de poids est respectivement compris dans un premier groupe d'éléments d'application de poids différent.

2. Circuit intégré selon la revendication 1, dans lequel chacun des éléments d'application de poids comprend un circuit d'application de poids comprenant :
un récepteur d'entrée synaptique configuré pour recevoir le signal d'entrée synaptique à partir de l'intégrateur présynaptique et pour générer un courant d'entrée synaptique sur la base du signal d'entrée synaptique ;
un élément de stockage de poids configuré pour stocker la valeur de poids ;
un élément de modification configuré pour appliquer la valeur de poids stockée dans l'élément de stockage de poids au courant d'entrée synaptique afin de générer le courant de sortie synaptique ;
dans lequel la valeur de poids est de préférence stockée sous forme numérique et transformée en domaine analogique par l'intermédiaire d'un convertisseur numérique-analogique de direction du courant,
dans lequel le convertisseur numérique-analogique de direction de courant est de préférence basé sur une architecture R- 2R, et
dans lequel le convertisseur numérique-analogique de direction de courant applique de préférence un facteur prédéterminé pour atténuer le courant d'entrée synaptique, et génère le courant de sortie synaptique sur la base du courant d'entrée synaptique atténué.

3. Circuit intégré selon la revendication 2, dans lequel la valeur de poids stockée dans l'élément de stockage de poids est ajustable, de préférence dans lequel la valeur de poids stockée dans l'élément de stockage de poids est ajustée sur la base d'une règle d'apprentissage ; et/ou
dans lequel le réseau comprend en outre un décodeur d'impulsions brèves en ligne configuré pour alimenter le signal d'impulsion présynaptique sur la base d'une impulsion brève d'entrée présynaptique, de telle sorte que le signal d'impulsion présynaptique est attribué à l'intégrateur présynaptique sur la base de la configuration du réseau neuronal impulsionnel ; et/ou
dans lequel le réseau neuronal impulsionnel comprend des neurones d'entrée qui génèrent le signal d'impulsion présynaptique, et dans lequel l'intégrateur présynaptique multiplexe les impulsions brèves temporelles provenant de différents neurones d'entrée ; et/ou
dans lequel la dynamique temporelle prédéterminée du signal d'entrée synaptique que l'intégrateur présynaptique génère est une dynamique temporelle AMPA, NMDA, GABA_{A} ou GABA_{B}.

4. Circuit intégré selon l'une quelconque des revendications précédentes, dans lequel l'intégrateur présynaptique génère un gain accordable indépendant d'une constante de temps accordable, dans lequel la constante de temps détermine un courant de fuite qui décumule la charge accumulée au sein de l'intégrateur présynaptique et caractérise la dynamique temporelle du signal d'entrée synaptique de l'intégrateur présynaptique.

5. Circuit intégré selon l'une quelconque des revendications précédentes, dans lequel l'intégrateur présynaptique est configurable par un signal de commande, de préférence dans lequel le signal de commande commande la forme temporelle du signal d'entrée synaptique ; et/ou
dans lequel les neurones de sortie sont commandés par un signal de commande de neurones de manière à commander la dynamique de neurones.

6. Circuit intégré selon l'une quelconque des revendications précédentes, dans lequel le réseau neuronal impulsionnel comprend une pluralité de premiers groupes d'éléments d'application de poids,
dans lequel chacun des éléments d'application de poids dans chaque premier groupe d'éléments d'application de poids est connecté pour recevoir le même signal d'entrée synaptique à partir d'un intégrateur présynaptique respectif, et
dans lequel chaque premier groupe d'éléments d'application de poids est connecté pour recevoir un signal d'entrée synaptique d'un intégrateur présynaptique différent de la pluralité d'intégrateurs présynaptiques.

7. Circuit intégré selon la revendication 6, dans lequel le réseau neuronal impulsionnel comprend une pluralité de neurones d'entrée, dans lequel un neurone d'entrée respectif des neurones d'entrée est connecté pour fournir un signal d'impulsion présynaptique à un intégrateur présynaptique respectif des intégrateurs présynaptiques pour fournir un signal d'entrée synaptique pour un premier groupe respectif d'éléments d'application de poids.

8. Circuit intégré selon l'une quelconque des revendications précédentes, dans lequel le réseau neuronal impulsionnel comprend une pluralité de seconds groupes d'éléments d'application de poids, dans lequel chaque second groupe d'éléments d'application de poids est connecté pour fournir des signaux de sortie synaptiques à un neurone de sortie différent de la pluralité de neurones de sortie ; et/ou
dans lequel le réseau neuronal impulsionnel présente une gamme d'activités de modèle en cours d'utilisation, comprenant une synchronie complète, des états en grappes ou asynchrones, des hétérogénéités dans les modèles d'entrée, une dynamique spatio-temporelle d'éléments neurosynaptiques, un comportement impulsionnel non linéaire et/ou une adaptabilité de fréquence.

9. Circuit intégré selon l'une quelconque des revendications 1 à 8, dans lequel chacun des éléments d'application de poids comprend en outre un élément de sélection de polarité, l'élément de sélection de polarité comprenant un circuit de sélection de polarité, de telle sorte que le signal de sortie synaptique de l'une quelconque des revendications 1 à 8 est utilisé par le circuit de sélection de polarité pour générer le courant de sortie de polarité, de préférence dans lequel le neurone d'entrée reçoit le courant de sortie de polarité et dans lequel le courant de sortie synaptique répliqué correspond à un signal de sortie synaptique excitateur et le courant de sortie synaptique inversé correspond à un signal de sortie synaptique inhibiteur ; et dans lequel le circuit de sélection de la polarité est configuré pour répliquer ou inverser un courant de sortie synaptique, et comprend :
un élément d'entrée de polarité configuré pour recevoir le courant de sortie synaptique ;
une borne de sélection de polarité configurée pour sélectionner un miroir de courant d'approvisionnement ou d'absorption sur la base d'un signal d'entrée de polarité ;
dans lequel le miroir de courant d'approvisionnement est configuré pour répliquer le courant de sortie synaptique ; et
dans lequel le miroir de courant d'absorption est configuré pour inverser le courant de sortie synaptique ; un élément de sortie de polarité qui génère un courant de sortie de polarité sur la base du courant de sortie synaptique répliqué ou inversé.

10. Circuit intégré selon la revendication 9, dans lequel l'intégrateur présynaptique comprend un circuit d'intégration présynaptique configuré pour générer un courant d'entrée synaptique pour l'entrée dans une pluralité d'éléments d'application de poids, comprenant :
un élément d'entrée configuré pour recevoir un signal d'impulsion présynaptique, de préférence une tension d'impulsion présynaptique, de préférence dans lequel le signal d'impulsion présynaptique est un train impulsionnel spatio-temporel ;
le condensateur ;
un élément de fuite configuré pour décharger au moins une partie de la charge accumulée par le condensateur ; et
un élément de sortie configuré pour générer le signal d'entrée synaptique sur la base de la charge accumulée par le condensateur pour alimenter la pluralité d'éléments d'application de poids.

11. Procédé d'intégration présynaptique et d'application de poids pour un réseau neuronal impulsionnel, le réseau neuronal impulsionnel comprenant une pluralité d'intégrateurs présynaptiques (209), une pluralité d'éléments d'application de poids (210) et une pluralité de neurones de sortie (220) ;
dans lequel le procédé comprend :
la réception, par chacun de la pluralité d'intégrateurs présynaptiques (213), d'un signal d'impulsion présynaptique (204) qui incite une accumulation de charge au sein de l'intégrateur présynaptique dans un condensateur configuré pour accumuler la charge en réponse au signal d'impulsion présynaptique ;
la génération, par chacun de la pluralité d'intégrateurs présynaptiques (213), d'un signal d'entrée synaptique (214) sur la base de la charge accumulée, de telle sorte que le signal d'entrée synaptique a une dynamique temporelle prédéterminée ;
la réception, par un premier groupe d'éléments d'application de poids (211) de la pluralité d'éléments d'application de poids (210), du signal d'entrée synaptique (214) à partir d'un premier intégrateur présynaptique de la pluralité d'intégrateurs présynaptiques (213) ;
l'application d'une valeur de poids au signal d'entrée synaptique (214) par chaque élément d'application de poids (211) du premier groupe d'éléments d'application de poids pour générer un courant de sortie synaptique (215), dans lequel l'intensité du courant de sortie synaptique est une fonction de la valeur de poids appliquée ; et
la réception, par chacun de la pluralité de neurones de sortie (222), d'un courant de sortie synaptique (214) à partir d'un second groupe d'éléments d'application de poids de la pluralité d'éléments d'application de poids, et la génération d'un signal de sortie de train impulsionnel spatio-temporel (223) sur la base du ou des courants de sortie synaptique reçus de telle sorte que chacun de la pluralité de neurones de sortie (222) a son propre ensemble d'éléments d'application de poids à partir desquels il reçoit des courants de sortie synaptiques, cet ensemble d'éléments d'application de poids formant un second groupe d'éléments d'application de poids, et chacun de ces éléments d'application de poids de ce propre ensemble d'éléments d'application de poids reçoit le signal d'entrée synaptique (214) à partir d'un intégrateur présynaptique différent de la pluralité d'intégrateurs présynaptiques et donc chacun de ces éléments d'application de poids de ce propre ensemble d'éléments d'application de poids est respectivement compris dans un premier groupe d'éléments d'application de poids différent.

12. Procédé d'intégration présynaptique et d'application de poids selon la revendication 11, dans lequel chacun des éléments d'application de poids comprend un circuit d'application de poids, adapté pour :
recevoir le signal d'entrée synaptique à partir de l'intégrateur présynaptique et pour générer un courant d'entrée synaptique sur la base du signal d'entrée synaptique ;
stocker les valeurs de poids ;
appliquer la valeur de poids stockée au courant d'entrée synaptique pour générer le courant de sortie synaptique.

13. Procédé d'intégration présynaptique et d'application de poids selon l'une quelconque des revendications 11 à 12, dans lequel l'intégrateur présynaptique génère un gain accordable indépendant d'une constante de temps accordable, dans lequel la constante de temps détermine un courant de fuite qui décumule la charge accumulée au sein de l'intégrateur présynaptique et caractérise la dynamique temporelle du signal d'entrée synaptique de l'intégrateur présynaptique.

14. Procédé d'intégration présynaptique et d'application de poids selon l'une quelconque des revendications 11 à 13, dans lequel le réseau neuronal impulsionnel comprend une pluralité de premiers groupes d'éléments d'application de poids ;
dans lequel chacun des éléments d'application de poids dans chaque premier groupe d'éléments d'application de poids est connecté pour recevoir le même signal d'entrée synaptique à partir d'un intégrateur présynaptique respectif ;
et dans lequel chaque premier groupe d'éléments d'application de poids est connecté pour recevoir un signal d'entrée synaptique d'un intégrateur présynaptique différent de la pluralité d'intégrateurs présynaptiques, et de préférence :
dans lequel le réseau neuronal impulsionnel comprend une pluralité de neurones d'entrée, dans lequel un neurone d'entrée respectif des neurones d'entrée est connecté pour fournir un signal d'impulsion présynaptique à un intégrateur présynaptique respectif des intégrateurs présynaptiques afin de fournir un signal d'entrée synaptique pour un premier groupe respectif d'éléments d'application de poids.

15. Procédé de classification de signaux d'entrée à l'aide du circuit intégré selon l'une quelconque des revendications 1 à 10.
